Europäisches Patentamt

European Patent Office

Office européen des brevets

(11) Veröffentlichungsnummer: **0 424 676 A1**

# (12) EUROPÄISCHE PATENTANMELDUNG

(21) Anmeldenummer: 90118246.9

(51) Int. Cl.5: **F16K 7/16**

(22) Anmeldetag: 22.09.90

(30) Priorität: 21.10.89 DE 3935171

(43) Veröffentlichungstag der Anmeldung:
02.05.91 Patentblatt 91/18

(84) Benannte Vertragsstaaten:
**DE FR GB LU SE**

(71) Anmelder: **MESSER GRIESHEIM GMBH**
**Hanauer Landstrasse 330**
**W-6000 Frankfurt/Main 1(DE)**

(72) Erfinder: **Becker, Karl August**
**Bergstrasse 21**
**W-6365 Rosbach(DE)**
Erfinder: **Hellmich, Jürgen**
**Homberger Landstrasse 752**
**W-6000 Frankfurt 56(DE)**

(54) **Membranventil.**

(57) Die Erfindung betrifft ein Membranventil (10) fir Druckgasbehälter oder -leitungen mit einer zweiteiligen Ventilspindel (12, 25) zwischen deren Druckstück (12) und einem Ventilsitz (17) des Auslasskanales (15) die metallische Membran (18) angeordnet ist.

Um bei geringen Dampfdrücken oder bei Defekten an den Ventilinnenteilen ein sicheres Öffnen des Ventiles zu ermöglichen, ist gemäß der Erfindung die Membran (18) an dem Druckstück (12) befestigt.

EP 0 424 676 A1

## MEMBRANVENTIL

Die Erfindung betrifft ein Membranventil für Druckgasbehälter oder -leitungen mit einer zweiteiligen Ventilspindel zwischen deren Druckstück und einem Ventilsitz des Auslasskanals die metallische Membran angeordnet ist.

Bei der Verwendung von hochreinen Gasen für verschiedene Produktionszwecke sind übliche Ventile wenig geeignet, da sie den in bezug auf den Reinheitsgrad der Gase geforderten Höchstansprüchen nicht genügen. Die Qualität des hochreinen Gases muß bezüglich seiner Reinheit möglichst unverändert aus einem Behälter zu einem Verbraucher geleitet werden.

Um Verunreinigungskomponenten wie Partikel und Feuchtigkeit zu verringern, werden Ventile mit möglichst wenig vom Reinstgas berührten, insbesondere beweglichen Teilen benötigt.

Geeignete Ventile für hochreine Gase sind beispielsweise in der Broschüre "Membranventile", Serien LD und ELD, Nupro-Company, N-786-G, 1986 dargestellt, bei denen an der Ventilspindel ein Gewindebolzen vorgesehen ist, der über einen Haltering und die metallische Membran in ein Ventilverschlußstück eingeschraubt ist. Die Membran ist mit dem Ventilverschlußstück verschweißt und wird über ein auf die Ventilspindel wirkendes Handrad zwangsbetätigt.

Dabei entsteht aufgrund des Ventilverschlußstückes ein großer Ventilraum (Totraum) mit großer gasberührter Oberfläche.

Neben der Abdichtung des Ventilsitzes mittels eines Ventilverschlußstückes sind auch Ventile bekannt, bei dem der Ventilsitz durch die Membran selbst verschlossen wird. Als Membranwerkstoff werden hierzu Gummi (DE 19 30 992 A1) bzw. eine Berilium-Kupfer-Legierung (DE 22 06 561 A1) vorgesehen.

Bei diesen Bauformen ergibt sich eine Verringerung des Ventilraumes im Vergleich zur eingangs genannten Bauart. Die Verwendung einer aus der DE 22 06 561 A1 bekannten vorgewölbten Membran bzw. eines Membranpaketes ermöglicht aufgrund der Membranspannung und des Gasdruckkes ein ausreichendes Abheben der Membran vom Ventilsitz beim Öffnen des Ventiles. Hierbei liegt die Ventilspindel lose an der Membranoberfläche an. Bei Gasen mit sehr geringen Dampfdrücken (Flascheninhaltsdruck) sowie für Gase mit höherem Inhaltsdruck bei nahezu entleerter Flasche kann es vorkommen, daß das Membranpaket nicht mehr weit genug geöffnet werden kann, weil die Membranspannung alleine für die Anlage an der Ventilspindel nicht mehr ausreicht. Gleiches kann bei Defekten an den Ventilinnenteilen vorkommen, wenn beispielsweise die Membran an dem Ventilsitz haften bleibt oder die Membran an ihrer Einspannstelle einreißt oder undicht wird und damit das Ventil nicht mehr gebrauchsfähig ist. Dabei kann der Fall eintreten, daß eine Entleerung des Flascheninhaltes unmöglich ist. Die Gasflasche muß dann bei giftigen und/oder aggressiven Medien mit großem Aufwand durch Anbohren geöffnet werden. Hierbei muß mit Schutzkleidung versehenes Personal in einem gasdichten Transportbehälter arbeiten. Aufgrund des großen Volumens des Behälters mit dem sich das aus der Gasflasche durch Anbohren ausströmende Gas vermischt, müssen große Gasmengen entsorgt werden.

Der Erfindung liegt die Aufgabe zugrunde, bei geringen Dampfdrücken oder bei Defekten an den Ventilinnenteilen ein sicheres Öffnen des Ventiles zu ermöglichen.

Diese Aufgabe wird bei einem gattungsgemäßen Membranventil durch die kennzeichnenden Merkmale des Anspruches 1 gelöst.

Durch die lösbare oder unlösbare Befestigung (z. B. durch Nieten, Schrauben, Kleben) der Membran bzw. des Membranpaketes mit dem sich nicht drehenden Druckstück ist eine Zwangsbetätigung gegeben, so daß immer, auch bei Beschädigungen bzw. geringen Dampfdrücken, das Abheben der Membran vom Ventilsitz gewährleistet ist. Da mit wird die Sicherheit bei Anlagen mit giftigen und/oder aggressiven Gasen erhöht. Durch die Verwendung einer metallischen Abdichtung kann das Ventil für alle Medien, bei denen gefährliche Reaktionen mit Weichdichtungen oder anderen Metallen zustande kommen könnten, eingesetzt werden.

Unter einer Energiestrahlschweißung wird eine Bearbeitung mit einem Laserstrahl, einem Elektronenstrahl oder einem Plasmastrahl verstanden.

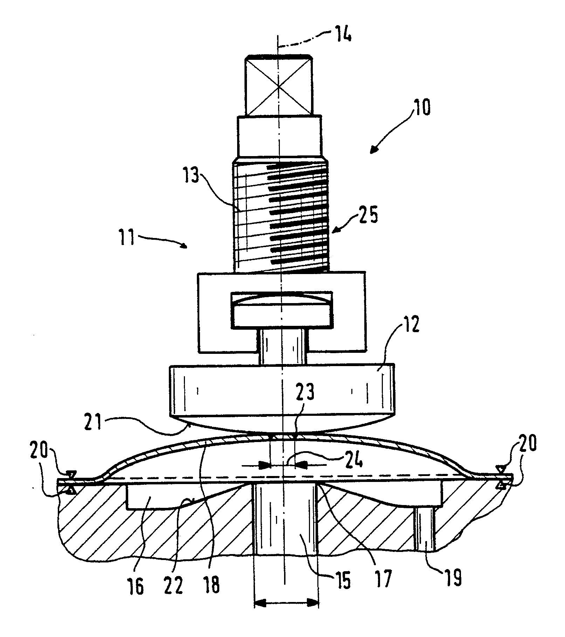

In der Zeichnung ist eine vergößerte Schnittdarstellung der zweiteiligen Ventilspindel mit der Membran und dem Ventilsitz dargestellt.

Das in der Zeichnung dargestellte Membranventil 10 weist eine zweiteilige Ventilspindel 11 auf, die aus einem Ventilspindeloberteil 25 und einem Druckstück 12 besteht. Das Ventilspindeloberteil ist zu dem in Drehrichtung ruhenden Druckstück 12 drehbar, aber in axialer Richtung kraftschlüssig mit diesem verbunden. Mit dem Ventilspindeloberteil 25 ist ein nicht näher dargestelltes Handrad verbunden, bei dessen Drehung das Ventilspindeloberteil 25 über ein Bewegungsgewinde 13 verstellt werden kann. Die axiale Verstellung entlang der Verstellachse 14 bewirkt ein Öffnen oder Schließen des Auslasskanales 15. Der Auslasskanal 15 ist beispielsweise mit einem Druckbehälter für hochreine Gase verbunden. Von dem Auslasskanal 15 strömt das hochreine Gas in den Ventilraum 16, von dem es bei geöffnetem Verschlußventil 17, 18 zu einer Gasführungsleitung 19 geleitet wird. Das Verschlußventil 17, 18 besteht aus einem Ventilsitz 17 und einer Membran 18, die fest in dem nicht näher dargestellten Gehäusekörper des Membranventiles 10 einge spannt ist. Die Einspannstelle ist schematisch mit 20 bezeichnet.

Die Membran 18 ist entgegengesetzt zur Schließrichtung des Ventiles 17, 18 gewölbt ausgebildet und besteht aus einem metallischen Werkstoff, der bei giftigen und/oder aggressiven Gasen eingesetzt werden kann. Dabei weist das Druckstück 12 eine zur Membran 18 gerichtete Oberfläche 21 auf, die sich bei der Schließbewegung des Druckstückes 12 kontinuierlich an die Wölbung der Membran 18 anlegt und diese abstützt. Eine Verformung der Membran 18 über deren Dehnungsgrenze wird vorteilhaft durch den nur gering über der Wandebene 22 des Ventilraumes 16 ausgebildeten Ventilsitz 17 erreicht. Beim Schließen des Ventiles 17, 18 kann die Membran 18 nur um den geringen vorgegebenen Abstand zwischen Ventilsitz 17 und Wandebene 22 verformt werden, wonach sich die Membran 18 auf die Wandebene 22 aufsetzt.

Die Membran 18 ist vorzugsweise mittels einer Energiestrahlschweißung 23 mit dem Druckstück 12 verbunden, so daß beim Aufdrehen des Ventilspindeloberteiles 25 das Druckstück 12 mit der daran befestigten Membran 18 sich vom Ventilsitz 17 zwangsbetätigt entfernt. Die Verbindung der Membran 18 mit dem Druckstück 12 erfolgt, vorzugsweise in dem dem Auslasskanal 15 gegenüberliegenden Bereich der Membran. Dieser Bereich bzw. der Umfang 24 der Energiestrahlschweißung 23 ist hierbei kleiner als die Öffnung des Auslasskanales 15. Durch diese Maßnahme wird einerseits eine Undichtigkeitsstelle an der Verbindung Ventilsitz 17 und Membran 18 vermieden, weil die Unebenheiten aufweisende Verbindungsstelle bei geschlossenem Membranventil 10 (strichlierte Stellung der Membran) innerhalb der Öffnung des Auslasskanales 15 ange ordnet ist. Andererseits wird durch diese Maßnahme eine Verbindung in unmittelbarer Nähe bzw. direkt in der Verstellachse 14 ermöglicht, wodurch bei vorgegebenem Hub eine kleinere gasberührte Membranoberfläche ermöglicht wird. Hieraus ergeben sich kleinere Abmessungen des Absperrventiles insgesamt und des gasberührten Ventilraumes. Darüber hinaus werden die auf das Bewegungsgewinde des Ventilspindeloberteiles 25 wirkenden Kräfte verringert.

**Ansprüche**

1. Membranventil (10) für Druckgasbehälter oder -leitungen, mit einer zweiteiligen Ventilspindel (12, 25), zwischen deren Druckstück (12) und einem Ven(tilsitz (17) des Auslasskanales (15) die metallische Membran (18) angeordnet ist,
dadurch gekennzeichnet,
daß die Membran (18) an dem Druckstück (12) befestigt ist.

2. Membranventil nach Anspruch 1,
dadurch gekennzeichnet,
daß die Membran (18) und das Druckstück (12) mittels einer Energiestrahlschweißung (23) verbunden sind.

3. Membranventil nach Anspruch 1 oder 2,
dadurch gekennzeichnet,
daß der Umfang (24) der Energiestrahlschweißung (23) kleiner ist, als die Öffnung des Auslasskanales (15).

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| D,Y | DE - A - 2 206 561 (MESSER GRIESHEIM GMBH) * Ansprüche 1,3,6; Fig. 1,2 * | 1 | F 16 K 7/16 |
| Y | DE - C1 - 3 546 117 (RESISTOFLEX GMBH) * Figurenbeschreibung; Fig. 1 * | 1 | |
| A | US - A - 4 750 709 (KOLENC et al.) * Gesamt * | 1 | |
| A | DE - A1 - 3 124 459 (HASSE) * Anspruch 1; Fig. 3 * | 1 | |
| A | US - A - 2 280 411 (KIENE) * Gesamt * | 1 | |
| A | US - A - 4 828 219 (OHMI et al.) * Gesamt * | 1 | RECHERCHIERTE SACHGEBIETE (Int Cl⁵) F 16 K F 16 T F 17 C B 65 D |
| A | DE - A1 - 3 725 589 (STEUERUNGSTECHNIK GMBH & CO) * Spalte 4, Zeilen 16-40; Fig. 1,2 * | 1 | |

Der vorliegende Recherchenbericht wurde für alle Patentansprüche erstellt.

| Recherchenort WIEN | Abschlußdatum der Recherche 16-01-1991 | Prüfer ROUSSARIAN |
|---|---|---|